# EUROPEAN PATENT APPLICATION

(11) **EP 1 364 926 A1**
(43) Date of publication of application: **26.11.2003**
(21) Application number: 03010878.1
(22) Date of filing: 15.05.2003
(51) Int. Cl.: C04B 28/02

(54) **Self-levelling cement mix**

(30) Priority: 20.05.2002 IT PN20020033
(71) Applicant: Kappa 6 Srl, 33077 Sacile, PN (IT)
(72) Inventor: Zampieri, Mirella, 35036 Montegrotto Terme, PD (IT)
(74) Representative: Dalla Rosa, Adriano

(57) **Abstract**

Self-levelling cement mix for filling up and sealing diggings of channels etc.. after that pipings, sewages and the like have been laid on, and for building works in general, comprising the following components :
a) large-sized sand or inert materials of various kind for building industry, with medium-sized grains preferably of 3 mm,
b) fine-sized sand or inert materials of various kind for building industry, with medium-sized grains preferably of 1,5 mm,
c) ash deriving from coal combustion,
d) cement of conventional type, and preferably cement 325 Portland,
e) aerating agent for cements,
f) fluidifying agent,
g) water,wherein this mixing occurs preferably at ambient pressure and temperature and with pre-established compositions.

## Description

The invention relates to a self-levelling cement mix which is employed for filling up and sealing diggings of channels, trenchs, sewages and the like and for building works of various kind.

At the present, for filling up the diggings effected on the ground for laying pipings, sewages and the like, after that these pipings, sewages etc.. have been laid on they are covered with compacting material so as to keep them on position and to close the diggings, and as material it is normally used concrete of conventional kind, which is poured on position, or it is utilized some embankment earth or loose tombstone material (sand, crushed stone, coarse gravel), or a combination of materials concrete and embankment earth or tombstone material which are suitably mixed with each other.

The use of the above mentioned filling and compacting materials, however, gives raise to some drawbacks. In fact, first of all these materials arent'able to perform effective sealings of the pipings, sewages and the like which have been laid underground, due to the difficulty of these materials to distribute themselves for filling all the areas of pipings and sewages, and under these circumstances inadequate sealings may sometimes occur on the junctions of such pipings and sewages, with consequent outgoing and loss of the fluid transported through such pipings and sewages. This phenomenon tends to occur by using both fluid concretes and embankment earth or loose tombstone material, and with these later materials which are denser and less fluid the above phenomenon is particularly emphasized, owing to the greater difficulty of these materials to distribute uniformly themselves on all the positions of pipings and sewages. Another drawback of the use of the current materials is due to the difficulty to arrange the digging filling and sealing material, which is submitted to the continuous loads produced by the traffic of vehicles being passing over the same material and tends to yield slowly and progressively, particularly in the case in which the material is embankment earth or tombstone material, and this material has been covered with a road carpet.

Also in this case, the use of compacted tombstone material involves a more accentuated phenomenon, since a slow and progressive crushing on position of the weaker tombstone elements and a penetration of the stiffer tombstone elements on the more yieldable original ground may occur. Finally, the use of these filling and sealing materials involves the drawback that the same materials are difficult to be removed, when such removal is needed for maintenance or repair works of pipings, sewages etc.. and it is very difficult and burdensome if the used material is concrete.

The object of the invention is to eliminate the above drawbacks and applicative limits deriving from the use of the current materials, by means of the use of the cement composition according to the same invention, which is adapted to provide for an effective filling, compacting and sealing of diggings with piping, sewages etc.. laid underground, and it is absolutely stable on time and easily removable in the cases of need for performing the above described works.

This cement composition is made with the constructive characteristics substantially described with particular reference to the enclosed patent claims.

The invention will be better understood from the following description, given solely by way of not-limitative example. The self-levelling cement mix in accordance to the invention is constituted substantially by the following components :
1) large-sized sand of various kind, with medium-sized grains preferably of 3 mm,
2) fine-sized sand of various kind, with medium-sized grains preferably of 1,5 mm,
3) volatile ash, this term being intended as a remanent product of coal combustion, like for example in the thermoelectric power plants ;
4) cement of conventional type, and preferably but not necessarily cement Portland 325,
5) aerating agent for cements,
6) fluidifying agent, constituted by a mixture of surface-active agents and dispersants,
7) water.

The above components are mixed to each other at the ambient pressure and temperature, with the following compositions
1) large-sized sand from 1 to 10.000 Kg/m3, preferably 840 Kg/m3,
2) fine-sized sand from 1 to 10.000 Kg./m3, preferably 780 Kg/m3,
3) volatile ash from 0,5 to 90 Kg/m3, preferably 25 Kg/m3,
4) cement from 0,5 to 500 Kg/m3, preferably 60 Kg/m3,
5) aerating agent for cements from 0,1 liter/m3 to 50 liter/m3, preferably 0,8 liter/m3,
6) fluidifying agent from 0,1 liter/m3 to 50 liter/m3, preferably 1,8 liter/m3,
7) water from 1 Kg/m3 to 500 Kg./m3, preferably 155 Kg/m3.

Instead of sands, as components under 1) and 2) also inert materials of various kind for building industry, with the same composition, may be used.

Instead of volatile ash, as component under 3) also hydraulic lime, with the same composition, may be used. As aerating agent for cement, also the product named RH878, of the Firm MAC S.p.A., via Vic. Corti 21, Treviso, Italy, may be advantageously used and as fluidifying agent the product named MVR of the above same Firm may be advantageously used. As alternative, as aerating agent and fluidifying agent also the product named RIVEREN ITL 27P of the Firm Rental Colloid of Valdobbiadene (TV), via Prà Fontana 55/1, Italy may be advantageously used. The so obtained cement composition is used for filling up and compacting the diggings where pipings, sewages and the like have been laid underground, and thanks to its excellent fluidity it has the capacities to distribute itself on all positions, thereby filling up and sealing effectively all the pipings and sewages laid underground, as well as the effected diggings, thereby preventing any outgoing and loss of the fluids transported through the pipings and sewages, as well as permitting a quick settling of the material without possibilities that it may yield subsequently, after hardening thereof, so as to ensure a high ground compactedness and an absolute stability on the time. Finally, thanks to the limited resistance to tensile stress of this material, it may be easily removed in a simple and quick manner without difficulty, when requested for performing subsequent maintenance or repair works of pipings and sewages. The cement mix according to the invention may be advantageously utilized also for further applications, such as for example :
a) for floor foundations : it allows to effect a perfect leveling of the laying plane surfaces of the foundations for buildings, swimming pools, sheds, etc.. by replacing the conventional leans,
b) for bases it is particularly suitable in the building industry for manufacturing of floor bases;
c) insulating mix, it is employed - alone or mixed with other light components (expanded clay, vermiculite, pumice, lapilli) for manufacturing of high insulating elements, for elevation structures (filling of box-like masonries) and horizontal or sub-horizontal structures (flat roofs or roofs with variable inclination),
d) filling up of hollow spaces on the ground, of old reservoirs to make inert etc..
e) sound absorbing panels for sheds and building industry in general,
f) civil and road building, bridges, viaducts etc..

## Claims

1. Self-levelling cement mix for filling up and sealing diggings of channels, trenchs, sewages andthe like, after that the pipings, sewages and the like have been laid on, and for buidling works in general, **characterized by** mixing the following components :
a) large-sized sand or inert materials of various kind for building industry, with medium-sized grains preferably of 3 mm,
b) fine-sized sand or inert materials of various kind for building industry, with medium-sized grains preferably of 1,5 mm,
c) ash deriving from coal combustion,
d) cement of conventional type and preferably cement 325 Portland,
e) aerating agent for cements,
f) fluidifying agent,
g) water,wherein this mixing occurs preferably at ambient pressure and temperature.

2. Cement mix according to claim 1, **characterized in that** said components are mixed to each other with the following compositions :
a) from 1 to 10.000 Kg/m3, preferably 840 Kg/m3,
b) from 1 to 10.000 Kg/m3, preferably 780 Kg/m3,
c) from 0,5 to 90 Kg/m3, preferably 25 Kg^{/m3},
d) from 0,5 to 500 Kg/m3, preferably 60 Kg/m3,
e) from 0,1 liter/m3 to 50 liter/m3, preferably 0,8 liter/m3,
f) from 0,1 liter/m3 to 50 liter/m3, preferably 1,8 liter/m3,
g) from 1 Kg/m3 to 500 Kg/m3, preferably 155 Kg/m3.

3. Cement mix according to claim 2, **characterized in that** as component under c) also hydraulic lime with the same composition may be used.

4. Cement mix according to the preceding claims, **characterized in that** as component under e) also the product named RH 878 of the Firm MAC S.p.A, via Vic. Corti 21, Treviso, Italy may be used.

5. Cement mix according to the preceding claims, **characterized in that** as component under f) also the product named MVR of the Firm MAC S.p.A., via Vic. Corti 21, Treviso, Italy may be used.

6. Cement mix according to the preceding claims, **characterized in that** as component under e) and f) also the product named RIVEREN ITL 27P of the Firm Rental Colloid, via Prà Fontana 55/1, Valdobbiadene (TV), Italy may be used, of which the component under f) is constituted by a mixture of surface- active agents and dispersants.
